Europäisches Patentamt

European Patent Office

Office européen des brevets

(19)

(11) **EP 1 447 771 A1**

(12) **EUROPEAN PATENT APPLICATION**

(43) Date of publication:
**18.08.2004   Bulletin 2004/34**

(51) Int Cl.[7]: **G06T 3/60**, G06T 1/60

(21) Application number: **03445022.1**

(22) Date of filing: **13.02.2003**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(71) Applicant: **Sony Ericsson Mobile
Communications AB
221 88 Lund (SE)**

(72) Inventors:
• **Märtensson, Tony
224 77 Lund (SE)**
• **Sundström, Henrik
245 61 Staffanstorp (SE)**

(74) Representative: **Akerman, Marten Lennart et al
Albihns Malmö AB
Box 4289
203 14 Malmö (SE)**

(54) **Method and apparatus for rotation of an image**

(57)    The invention relates to a method and an apparatus for rotation of an image, and more particularly transferring a digitally stored image from one orientation to another. By copying pixel values from a source image orientation to a destination image orientation, only a single buffer if needed for the process. The invention includes the steps of: moving all pixel values one by one in a linked order, by: a) taking a first pixel value from the source image and mapping it to a corresponding pixel position in the destination image, b) temporarily storing the existing pixel value of the source image at this position and storing said first pixel value from the source image in its place, c) mapping said existing pixel value of the source image to its corresponding pixel position in the destination image, d) similarly repeating steps b) and c) with succeeding pixels,
wherein the linked order is arranged so that all pixels will be run through.

FIG 7

**Description**

Field of invention

The present invention relates to a method and an apparatus for transformation of a data file, and more particularly transferring a digitally stored image from one orientation to another, e.g. rotation of an image. By copying pixel values from a source image orientation to a destination image orientation, only a single buffer is needed for the process. The invention is intended to be used in portable devices, such as cameras and other devices handling images including personal computers and communication apparatus such as portable telephones.

State of the art

Current implementations of image rotation use two RAM buffers, each one large enough to hold the entire image. Pixels are copied from the source image buffer to the destination image buffer so that the destination image will be a rotated version of the source image.

It is also previously known to sub-divide the source image in small parts. US 5,598,181 discloses an image processing method providing rotation of a digital image in place in an image buffer and using a small auxiliary buffer holding a segmented image, defined by a rectangular pattern of square blocks ofN pixels per row and N lines per column, and rotating each square block of pixels by ninety degrees.

The current solutions use up to twice the amount of memory needed to store the image itself. This limits the maximum size of image that can be rotated to half the available memory. This is a problem especially in portable devices in which space is at a premium and the required memory should be as small as possible.

Summary of the invention

The present invention solves this problem by finding an order to move all pixels one by one, so that only one pixel value has to be stored in an auxiliary storage. Each pixel is moved directly from its source image position to its destination image position. Thus, the memory size needed is kept at a minimum.

In one aspect, the invention provides a method for transforming a data file comprising entries stored in a memory, from a source file ordering to a destination file ordering

According to the invention, the method includes the steps of:

moving all entries one by one in a linked order, by: a) taking a first entry from the source file and mapping it to a corresponding entry position in the destination file, b) temporarily storing the existing entry of the source file at this position and storing said first entry from the source file in its place, c) mapping said existing entry of the source file to its corresponding entry position in the destination file, d) similarly repeating steps b) and c) with succeeding entries,

wherein the linked order is arranged so that all entries will be run through.

In a second aspect, the invention provides a method for mapping an image, formed by pixels stored as a number of pixel values associated with pixel positions in a memory, from a source image orientation to a destination image orientation.

According to the invention, the method includes the steps of:

moving all pixel values one by one in a linked order, by: a) taking a first pixel value from the source image and mapping it to a corresponding pixel position in the destination image, b) temporarily storing the existing pixel value of the source image at this position and storing said first pixel value from the source image in its place, c) mapping said existing pixel value of the source image to its corresponding pixel position in the destination image, d) similarly repeating steps b) and c) with succeeding pixels,

wherein the linked order is arranged so that all pixels will be run through.

A predetermined linked order may be stored in a memory.

In one embodiment, the linked order is formed by a mapping algorithm describing the movements of all pixels from the source image orientation to the destination image orientation.

The mapping algorithm may further be combined with an address list containing a number of starting points for cycles, each cycle mapping a part of the pixels.

The address list may be fixed.

The address list may be formed by performing an initialising run of the mapping algorithm.

In one embodiment, the initialising run comprises: determining the specific size of the image; allocating a suitable space in a RAM, setting all positions of said memory space to zero; selecting one position as starting point, and i) storing the address of the starting point in the address list; ii) mapping the starting point from the source image to a corresponding position in the destination image, iii) setting this position to one, iv) mapping said corresponding position to its new corresponding position in the destination image, v) similarly repeating steps iii) and iv) with succeeding positions until the value at a new corresponding position is one; selecting a new position as next starting point and similarly repeating steps i) through v) with succeeding starting points until the whole allocated memory space is set to one.

The succeeding starting point may be selected by locating the first position of said memory space storing a zero by means of a linear search starting from the latest address stored in the address list plus one.

The address list may be formed by means of a formula.

The mapping algorithm may involve a rotation by 90 degrees.

In a third aspect, the invention provides an apparatus for transforming a data file comprising entries stored in a memory, from a source file ordering to a destination file ordering.

According to the invention the apparatus comprises a (RAM) memory buffer for storing the entries of the data file;

logic means for moving all entries one by one in a linked order, and adapted to perform the following steps: a) taking a first entry from the source file and mapping it to a corresponding entry position in the destination file, b) temporarily storing the existing entry of the source file at this position and storing said first entry from the source file in its place, c) mapping said existing entry of the source file to its corresponding entry position in the destination file, d) similarly repeating steps b) and c) with succeeding entries,

wherein the linked order is arranged so that all entries will be run through.

In a fourth aspect, the invention provides an apparatus for mapping an image, formed by pixels stored as a number of pixel values associated with pixel positions in a memory, from a source image orientation to a destination image orientation.

According to the invention the apparatus comprises a (RAM) memory buffer for storing the pixel values of the image; logic means for moving all pixel values one by one in a linked order, and adapted to perform the following steps: a) taking a first pixel value from the source image and mapping it to a corresponding pixel position in the destination image, b) temporarily storing the existing pixel value of the source image at this position and storing said first pixel value from the source image in its place, c) mapping said existing pixel value of the source image to its corresponding pixel position in the destination image, d) similarly repeating steps b) and c) with succeeding pixels,

wherein the linked order is arranged so that all pixels will be run through.

The apparatus may comprise a memory for storing the predetermined linked order.

In one embodiment, the apparatus comprises a mapping algorithm for forming the linked order describing the movements of all pixels from the source image orientation to the destination image orientation.

The apparatus may further comprise an address list containing a number of starting points for cycles, each cycle mapping a part of the pixels, for forming the linked order by means of the mapping algorithm in combination with the address list.

The address list may be fixed.

The apparatus may further comprise means for forming the address list by performing a initialising run of the mapping algorithm.

In one embodiment, the means for forming the address list is adapted to perform the following steps: determining the specific size of the image; allocating a suitable space in a RAM, setting all positions of said memory space to zero; selecting one position as starting point, and i) storing the address of the starting point in the address list, ii) mapping the starting point from the source image to a corresponding position in the destination image, iii) setting this position to one, iv) mapping said corresponding position to its new corresponding position in the destination image, v) similarly repeating steps iii) and iv) with succeeding positions until the value at a new corresponding position is one; selecting a new position as next starting point and similarly repeating steps i) through v) with succeeding starting points until the whole allocated memory space is set to one.

The means for forming the address list may be adapted to select the succeeding starting points by locating the first position of said memory space storing a zero by means of a linear search starting from the latest address stored in the address list plus one.

The means for forming the address list may be adapted to form the address list by means of a formula.

The mapping algorithm may involve a rotation by 90 degrees.

The apparatus may be a portable apparatus capable of handling images and may further include or be connectable to a camera.

The portable apparatus may be a communication apparatus such as a portable telephone, a pager, a communicator or an electronic organiser.

## EP 1 447 771 A1

Brief description of the drawings

The invention will be described in detail below with reference to the accompanying drawings, in which:

fig. 1 is a schematic drawing of rotation of an image according to the invention and the prior art,
fig. 2 is a diagram illustrating the contents of the memory before and after rotation,
figs. 3 A - C illustrate three steps of moving pixels from one orientation to another,
fig. 4 illustrates the contents of the memory after one cycle,
figs. 5 A - D illustrate four steps of forming an address list according to the invention,
fig. 6 illustrates starting addresses for cycles in a 4 × 4 image, and
fig. 7 schematically illustrates the memory and logic structures of an apparatus according to the invention.

Detailed description of preferred embodiments

The invention will be explained with reference to rotation of an image of a small size. A person skilled in the art will realise that in a real application the size of the image will be much larger. Also, in principle the invention is equally applicable to all kinds of transformations of images, not just rotation by ninety degrees. The only requirement for using the invention to perform an arbitrary transformation is that a sequence/order of pixel movements can be determined so that every pixel in the source image has an exactly defined location in the destination image. The transformation must be formulated so that no two pixels in the source image will map to the same location in the destination image. The transformation must thus be reversible. Generally, the invention is applicable to reversible transformations of any data file from one ordering to another.

The invention is intended to be used in portable devices, such as cameras and other devices handling images including personal computers and communication apparatus such as portable telephones, pagers, communicators or electronic organisers. However, the invention is not limited to the listed devices.

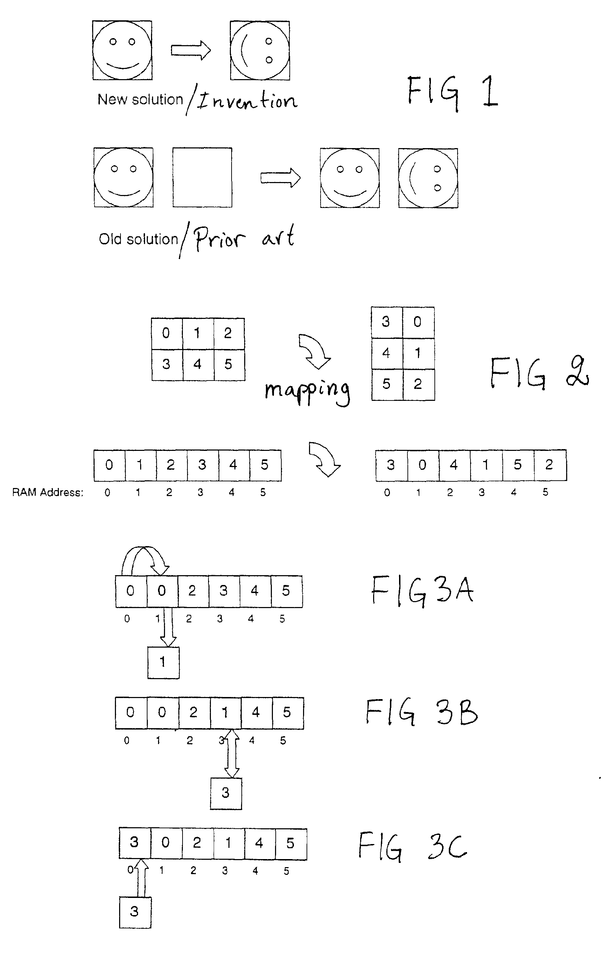

It is useful first to explain how an image rotation was implemented in the prior art. In fig. 1 the squares illustrate the contents of a random access memory (RAM), in which pixel values are stored to represent a real image which may be shown on a display. In the prior the image was copied from an image file (not shown) to a RAM buffer. By mathematically manipulating the pixel values, these were copied and placed in another RAM of the same size but with a different location of the pixels such that the image was rotated. It will be seen that in the end the entire image is stored twice, each version in its own RAM.

In contrast, the present invention only uses one single buffer RAM to store the image. The invention will use some extra memory space, at least one position to store one pixel only and some space for storing an address list as will be explained in further detail below. Initially, the entire image is stored in one orientation as shown to the left, and at the end of the procedure the entire image is stored in another orientation, but still within the same buffer. During the reorientation procedure, the RAM contains a mix of the two image orientations. In other words, some pixels have been moved and are located correctly in the destination image, while some pixels are awaiting to be moved and still resides in their original positions. Just the one pixel actually being moved has to be stored outside the RAM buffer.

The process is performed as follows. The invention works by picking one pixel at a time and moving that pixel to its new memory location. The pixel at that location is in turn moved and so on. Eventually, the very first pixel is revisited and the process must stop. The set of memory locations visited is called a cycle in this application. For some image sizes (width × height), the entire transformation can be performed in one cycle, while for most image sizes, several cycles will have to be traversed. Every time a cycle is complete, a new starting point, not yet visited, must be found until all pixels have been moved.

The invention thus has two parts, one part for moving all pixels in a cycle and one part for finding all cycles for a given image size.

An example will be given for a 3×2 image to be rotated ninety degrees clockwise. As is seen from fig. 2, the mapping to be performed involves a relatively simple mathematical algorithm. If the images are stored row-by-row in an image RAM, the RAM view will be as shown in fig. 2, at the bottom. Six RAM addresses are shown below the positions, while the pixel values are represented by the numbers 0 through 5. In reality, the pixel values are of course a set of values representing grey levels and colour values. However, the pixel value is always moved as a unity.

Now with reference to fig. 3A-C, the pixel movement is shown step-by-step. The pixel shifting starts at one address, conveniently address 0 (zero). As shown in fig. 3A, the pixel at that address goes into address 1 in the rotated image. The pixel value at address 1 in the source image is put into temporary storage and is then moved to address 3, where it belongs in the rotated destination image, as is shown in fig. 3B.

An identical movement operation is now repeated. In other words, the pixel value at address 3 is put in temporary storage, and is then moved to address 0,
where it belongs in the rotated destination image. This completes the cycle, since address zero is where the pixel

4

shifting began, as is shown in fig. 3C.

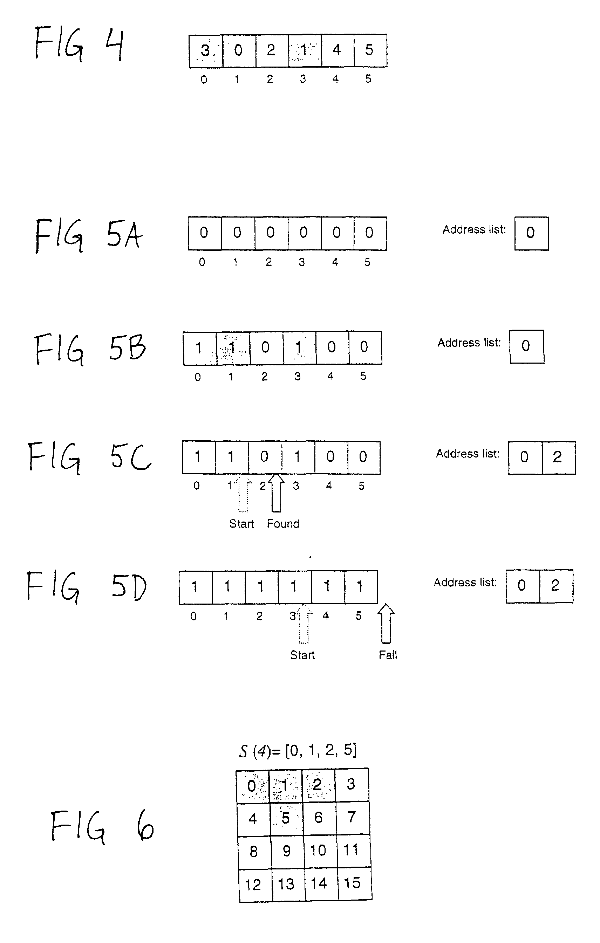

At this point, the pixels marked in fig. 4 have been shifted. It will be seen that the marked pixels are at their correct locations in the destination image, while the remaining pixels, awaiting to be moved, are still at their correct positions in the source image.

In this manner all the pixels are held in the same RAM buffer and only the pixel actually being moved is temporarily copied and put in the auxiliary temporary storage.

To move the remaining pixels a new starting point has to be found. For instance, the next cycle can be started at address 2. After completing that cycle, the entire image has been rotated, since the $3\times2$ image contains only two cycles.

For a rotation by ninety degrees clockwise, the formula to obtain the next address in a cycle is given by the expression:

$$M_0 \in = [0, H \times W - 1]$$

$$M_{n+1} = H \times ((M_n \bmod W) + 1) - ((M_n \operatorname{div} W) + 1)$$

where

- $M_n$ is the n'th address in the cycle
- $H$ is the height in pixels of the image
- $W$ is the width in pixels of the image

In the example, the first cycle was given by

$M_0 = 0$
$M_1 = 1$
$M_2 = 3$ (the cycle is completed here)
$M_3 = 0$ (here it starts again)
$M_4 = 1$
...

It is easily seen that any address in the cycle can serve as a starting point for traversing the cycle.

Some image sizes (e.g. a $6\times10$ image) will contain only one cycle, whereas some will contain hundreds of cycles.

The number of cycles and the exact memory locations in each cycle for a given image size is not easily determined. There is no arithmetic expression for these values in the general case.

This means that starting points for all cycles must be known and stored before the image rotation takes place.

As pointed out earlier, the process of finding all cycles takes place before pixel shifting. The image size must be known. It is assumed that the image data is kept in permanent storage and is accessed e.g. through a file system.

The image size is obtained from the stored image data. For all relevant image file formats, this information is kept in a header prepended to the image data itself. Extraction of this data is thus trivial.

Once the image size is known, the RAM needed to store the image is allocated. Before the pixel data is actually read from file, this memory will be used to find all cycles.

All pixels are initialised to a zero value. The mapping algorithm that will later be used to traverse and shift all pixels in a cycle is employed to do a "dry run" of the algorithm, which will initialise an address list of starting points.

The algorithm conveniently starts at address zero. The first cycle is run through. As each pixel memory address in the cycle is visited, that location is changed to the value 1.

After the cycle is completed the memory is scanned for zeroes, since these will mark unvisited pixels. As the first zero is encountered, that location is used as the starting point for the next cycle. This process continues until no more zeroes/starting points can be found. Each time a starting point is found, the corresponding address is stored in the address list. That list is used when rotating, to access all cycles of the image.

Again we consider a $3\times2$ image to be rotated. First we want to find and store all starting points for the cycles in the image. The memory needed to store a $3\times2$ image is allocated and initialised to zero. A list to store starting points is created as shown in fig. 5A.

The first cycle always starts at address 0, so that is put first in the list. After the first cycle is completed, all addresses belonging to that cycle will be marked with ones as shown in fig. 5B.

To find the next starting point, the first address storing a zero value is located e.g. by a linear search starting at the latest address stored in the list plus one, in this case address 0 + 1 as shown in fig. 5C.

Address 2 is found and stored in the list.

The shifting process starts again until the second cycle is exhausted. After that, the search process (starting at address 2 + 1 = 3) is unable to find unvisited pixels (zeroes) in the memory, as shown in fig. 5D.

All cycles have been found and corresponding starting points are stored in the address list.

The image can now be read into memory and rotated using the shifting process described earlier and the address list containing all starting points.

For some common image sizes, it makes sense to pre-compute and store the table of starting points in permanent storage. Such sizes include VGA (640 x 480 pixels) and CIF (352 x 288 pixels). Instead of a mapping algorithm, the whole movement operation may be stored as a predetermined fixed linked order of movements.

In the special case of a square $(N \times N)$ image, no table needs to be generated. The set of starting addresses $S$ $(N)$ is given by the expression:

$$S(N)=[M], M= N \times Y + X, Y \in [0, N \text{ div } 2 - 1], X \in [Y, N - Y - 2]$$

This can be expressed in algorithmic form (pseudo-code):

```
I =0
Y =0
while (Y < N div 2)
{
    X = Y
    while (X < N - Y - 1 )
    {
        S[I] = N x Y + X
        X =X + 1
        I = I + 1
    }
    Y = Y + 1
}
```

An example is given in fig. 6 showing starting addresses for cycles in a $4 \times 4$ image. The address list is S(4) = [0, 1, 2, 5].

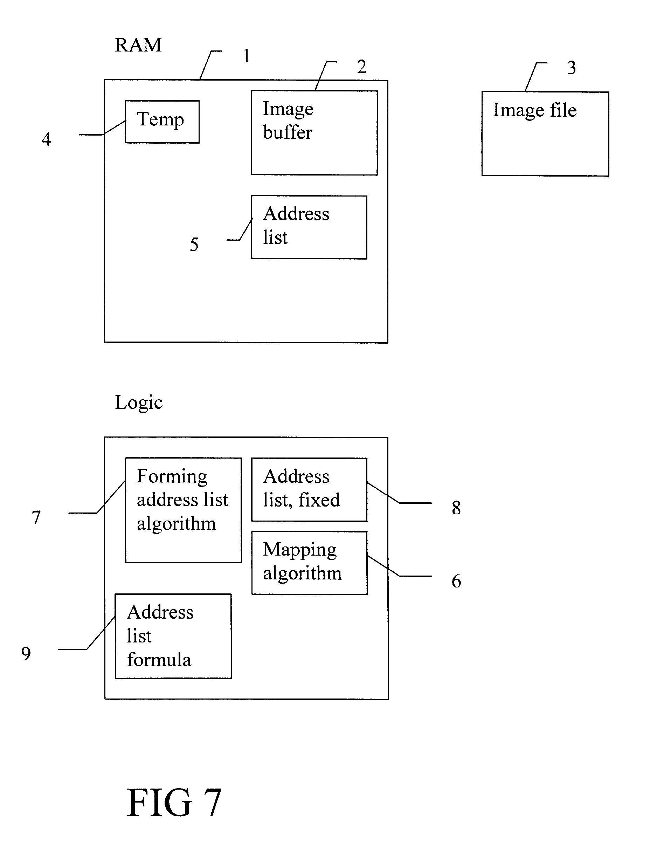

Fig. 7 shows a schematic implementation of the memory and logic structure of an apparatus according to the invention. As mentioned above, the apparatus can be any device handling images. The apparatus contains a random access memory RAM 1, in which a space can be allocated for holding the image. This is the image buffer 2, in which the image from an external image file 3 can be loaded. The RAM 1 also contains the temporary storage 4, in which the pixel value being moved is held temporarily. Conveniently, the address list 5 is also held in the RAM 1, especially if the address list is variable.

The apparatus also contains logic for performing the various operations. The logic is programmed in a permanent storage, which in principle also could be a random access memory. The logic contains a mapping algorithm 6 which is used for moving pixels from the source image orientation to the destination image orientation. As discussed above, the mapping algorithm can also be used for creating the address list which is needed in certain image formats.

The logic also contains an algorithm 7 for forming the address list. For some image formats, instead a fixed address list 8 is used, while for certain other image formats an address list formula 9 is used.

The invention allows transformation of data files, and particularly rotation of images by means of a buffer that is the same size as the image file itself. Thus, the buffer size needed is almost half the size of the buffer size needed in the prior art. Since random access memories, and especially graphics random access memories, are expensive parts of digital image systems including personal and mobile phones, the invention assists in cutting costs at a fixed performance.

**Claims**

1. A method for transforming a data file comprising entries stored in a memory, from a source file ordering to a destination file ordering, **characterised by** the steps of:

    moving all entries one by one in a linked order, by: a) taking a first entry from the source file and mapping it to a corresponding entry position in the destination tile, b) temporarily storing the existing entry of the source file at this position and storing said first entry from the source file in its place, c) mapping said existing entry of the source file to its corresponding entry position in the destination file, d) similarly repeating steps b) and c) with succeeding entries,

wherein the linked order is arranged so that all entries will be run through.

2. A method for mapping an image, formed by pixels stored as a number of pixel values associated with pixel positions in a memory, from a source image orientation to a destination image orientation, **characterised by** the steps of:

moving all pixel values one by one in a linked order, by: a) taking a first pixel value from the source image and mapping it to a corresponding pixel position in the destination image, b) temporarily storing the existing pixel value of the source image at this position and storing said first pixel value from the source image in its place, c) mapping said existing pixel value of the source image to its corresponding pixel position in the destination image, d) similarly repeating steps b) and c) with succeeding pixels,

wherein the linked order is arranged so that all pixels will be run through.

3. A method according to claim 2, **characterised in that** a predetermined linked order is stored in a memory.

4. A method according to claim 2 or 3, **characterised in that** the linked order is formed by a mapping algorithm describing the movements of all pixels from the source image orientation to the destination image orientation.

5. A method according to claim 4, **characterised in that** the linked order is formed by a mapping algorithm further combined with an address list containing a number of starting points for cycles, each cycle mapping a part of the pixels.

6. A method according to claim 5, **characterised in that** the address list is fixed.

7. A method according to claim 5, **characterised in that** the address list is formed by performing a initialising run of the mapping algorithm.

8. A method according to claim 7, **characterised in that** the initialising run comprises: determining the specific size of the image; allocating a suitable space in a RAM, setting all positions of said memory space to zero; selecting one position as starting point, and i) storing the address of the starting point in the address list; ii) mapping the starting point from the source image to a corresponding position in the destination image, iii) setting this position to one, iv) mapping said corresponding position to its new corresponding position in the destination image, v) similarly repeating steps iii) and iv) with succeeding positions until the value at a new corresponding position is one; selecting a new position as next starting point and similarly repeating steps i) through v) with succeeding starting points until the whole allocated memory space is set to one.

9. A method according to claim 8, **characterised in that** the succeeding starting point are selected by locating the first position of said memory space storing a zero by means of a linear search starting from the latest address stored in the address list plus one.

10. A method according to claim 5, **characterised in that** the address list is formed by means of a formula.

11. A method according to any one of claims 2 to 10, **characterised in that** the mapping algorithm involves a rotation by 90 degrees.

12. An apparatus for transforming a data file comprising entries stored in a memory, from a source file ordering to a destination file ordering, **characterised by**:

a (RAM) memory buffer (2) for storing the entries of the data file;
logic means (6) for moving all entries one by one in a linked order, and adapted to perform the following steps:
a) taking a first entry from the source file and mapping it to a corresponding entry position in the destination file, b) temporarily storing the existing entry of the source file at this position and storing said first entry from the source file in its place, c) mapping said existing entry of the source file to its corresponding entry position in the destination file, d) similarly repeating steps b) and c) with succeeding entries,

wherein the linked order is arranged so that all entries will be run through.

13. An apparatus for mapping an image, formed by pixels stored as a number of pixel values associated with pixel positions in a memory (1), from a source image orientation to a destination image orientation, **characterised by**:

a (RAM) memory buffer (2) for storing the pixel values of the image;
logic means (6) for moving all pixel values one by one in a linked order, and adapted to perform the following steps: a) taking a first pixel value from the source image and mapping it to a corresponding pixel position in the destination image, b) temporarily storing the existing pixel value of the source image at this position and storing said first pixel value from the source image in its place, c) mapping said existing pixel value of the source image to its corresponding pixel position in the destination image, d) similarly repeating steps b) and c) with succeeding pixels,

wherein the linked order is arranged so that all pixels will be run through.

14. An apparatus according to claim 13, **characterised by** a memory for storing the predetermined linked order.

15. An apparatus according to claim 13 or 14, **characterised by** a mapping algorithm (6) for forming the linked order describing the movements of all pixels from the source image orientation to the destination image orientation.

16. An apparatus according to claim 15, **characterised by** further comprising an address list (5, 8) containing a number of starting points for cycles, each cycle mapping a part of the pixels, for forming the linked order by means of the mapping algorithm (6) in combination with the address list (5, 8).

17. An apparatus according to claim 16, **characterised in that** the address list (8) is fixed.

18. An apparatus according to claim 16, **characterised by** means (7) for forming the address list by performing a initialising run of the mapping algorithm (6).

19. An apparatus according to claim 18, **characterised in that** the means (7) for forming the address list is adapted to perform the following steps: determining the specific size of the image (3); allocating a suitable space (2) in a RAM (1), setting all positions of said memory space to zero; selecting one position as starting point, and i) storing the address of the starting point in the address list, ii) mapping the starting point from the source image to a corresponding position in the destination image, iii) setting this position to one, iv) mapping said corresponding position to its new corresponding position in the destination image, v) similarly repeating steps iii) and iv) with succeeding positions until the value at a new corresponding position is one; selecting a new position as next starting point and similarly repeating steps i) through v) with succeeding starting points until the whole allocated memory space (2) is set to one.

20. An apparatus according to claim 19, **characterised in that** the means (7) for forming the address list is adapted to select the succeeding starting points by locating the first position of said memory space (2) storing a zero by means of a linear search starting from the latest address stored in the address list plus one.

21. An apparatus according to claim 16, **characterised in that** the means for forming the address list is adapted to form the address list by means of a formula (9).

22. An apparatus according to any one of claims 13 to 21, **characterised in that** the mapping algorithm involves a rotation by 90 degrees.

23. An apparatus according to any one of claims 13 to 22, **characterised in that** it is a portable apparatus capable of handling images.

24. An apparatus according to claim 23, **characterised in that** it further includes or is connectable to a camera.

25. An apparatus according to claim 23 or 24, **characterised in that** the portable apparatus is a communication apparatus such as a portable telephone, a pager, a communicator or an electronic organiser.

New solution / *Invention*

FIG 1

Old solution / *Prior art*

*mapping*

FIG 2

RAM Address: 0 1 2 3 4 5

FIG 3A

FIG 3B

FIG 3C

FIG 4

| 3 | 0 | 2 | 1 | 4 | 5 |
|---|---|---|---|---|---|
| 0 | 1 | 2 | 3 | 4 | 5 |

FIG 5A

| 0 | 0 | 0 | 0 | 0 | 0 |
|---|---|---|---|---|---|
| 0 | 1 | 2 | 3 | 4 | 5 |

Address list: | 0 |

FIG 5B

| 1 | 1 | 0 | 1 | 0 | 0 |
|---|---|---|---|---|---|
| 0 | 1 | 2 | 3 | 4 | 5 |

Address list: | 0 |

FIG 5C

| 1 | 1 | 0 | 1 | 0 | 0 |
|---|---|---|---|---|---|
| 0 | 1 | 2 | 3 | 4 | 5 |

Start    Found

Address list: | 0 | 2 |

FIG 5D

| 1 | 1 | 1 | 1 | 1 | 1 |
|---|---|---|---|---|---|
| 0 | 1 | 2 | 3 | 4 | 5 |

Start        Fail

Address list: | 0 | 2 |

$S(4) = [0, 1, 2, 5]$

| 0 | 1 | 2 | 3 |
|---|---|---|---|
| 4 | 5 | 6 | 7 |
| 8 | 9 | 10 | 11 |
| 12 | 13 | 14 | 15 |

FIG 6

RAM

Temp

4

Image
buffer

Image file

3

2

1

Address
list

5

Logic

Forming
address list
algorithm

Address
list, fixed

8

7

Mapping
algorithm

6

Address
list
formula

9

# FIG 7

## EUROPEAN SEARCH REPORT

**European Patent Office**

**Application Number**

EP 03 44 5022

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | D.E.KNUTH: "THE ART OF COMPUTER PROGRAMMING - FUNDAMENTAL ALGORITHMS" 1988 , ADDISON WESLEY , READING, MASSACHUSETTS XP001149053 * page 160, paragraph 1 - page 181, last paragraph * --- | 1-25 | G06T3/60 G06T1/60 |
| Y | P.F. WINDLEY: "TRANSPOSING MATRICES IN A DIGITAL COMPUTER" THE COMPUTER JOURNAL, vol. 2, 1959, pages 47-48, XP008017473 * the whole document * --- | 1-25 | |
| A | M.F. BERMAN: "A METHOD FOR TRANSPOSING A MATRIX" JOURNAL OF THE ACM, vol. 5, no. 4, October 1958 (1958-10), pages 383-384, XP002241712 --- | | |
| A | HEEL VAN M: "A FAST ALGORITHM FOR TRANSPOSING LARGE MULTIDIMENSIONAL IMAGE DATA SETS" ULTRAMICROSCOPY, AMSTERDAM, NL, vol. 38, 1991, pages 75-83, XP002067228 ISSN: 0304-3991 --- | | **TECHNICAL FIELDS SEARCHED (Int.Cl.7)** <br><br> G06T |
| A | N. BRENNER: "MATRIX TRANSPOSITION IN PLACE" COMMUNICATIONS OF THE ACM, vol. 16, no. 11, November 1973 (1973-11), pages 692-694, XP002241713 --- | | |
| | -/-- | | |

The present search report has been drawn up for all claims

| Place of search | Date of completion of the search | Examiner |
|---|---|---|
| THE HAGUE | 23 May 2003 | Pierfederici, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 03 44 5022

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | "90 AND 270 ROTATION OF A 2 BINARY IMAGE USING A 2 BIT PROCESSOR" IBM TECHNICAL DISCLOSURE BULLETIN, IBM CORP. NEW YORK, US, vol. 30, no. 12, 1 May 1988 (1988-05-01), pages 26-28, XP000052158 ISSN: 0018-8689 --- | | |
| A | EP 0 497 493 A (AMERICAN TELEPHONE & TELEGRAPH) 5 August 1992 (1992-08-05) ----- | | |

TECHNICAL FIELDS SEARCHED (Int.Cl.7)

The present search report has been drawn up for all claims

| Place of search | Date of completion of the search | Examiner |
|---|---|---|
| THE HAGUE | 23 May 2003 | Pierfederici, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 03 44 5022

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2003

| Patent document cited in search report | | Publication date | Patent family member(s) | | Publication date |
|---|---|---|---|---|---|
| EP 0497493 | A | 05-08-1992 | CA | 2058585 C | 25-06-1996 |
| | | | EP | 0497493 A2 | 05-08-1992 |
| | | | JP | 6223099 A | 12-08-1994 |
| | | | KR | 249409 B1 | 15-03-2000 |
| | | | US | 5412740 A | 02-05-1995 |

For more details about this annex : see Official Journal of the European Patent Office, No. 12/82